(19) Europäisches Patentamt
European Patent Office
Office européen des brevets

(11) **EP 2 432 670 B1**

(12) **EUROPÄISCHE PATENTSCHRIFT**

(45) Veröffentlichungstag und Bekanntmachung des Hinweises auf die Patenterteilung:
**08.01.2014 Patentblatt 2014/02**

(21) Anmeldenummer: **10702041.4**

(22) Anmeldetag: **21.01.2010**

(51) Int Cl.:
***B60T 13/58*** *(2006.01)*

(86) Internationale Anmeldenummer:
**PCT/EP2010/000367**

(87) Internationale Veröffentlichungsnummer:
**WO 2010/133263 (25.11.2010 Gazette 2010/47)**

(54) **BREMSSYSTEM MIT DAUERBREMSINTEGRATION**

BRAKING SYSTEM HAVING AN INTEGRATED RETARDER

SYSTÈME DE FREINAGE À FREIN CONTINU INTÉGRÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **18.05.2009 DE 102009021685**

(43) Veröffentlichungstag der Anmeldung:
**28.03.2012 Patentblatt 2012/13**

(73) Patentinhaber: **WABCO GmbH**
**30453 Hannover (DE)**

(72) Erfinder:
• **FLAUM, Nikolai**
**30455 Hannover (DE)**
• **FRANKE, Torsten**
**31303 Burgdorf (DE)**
• **WALLBAUM, Torsten**
**31089 Duingen (DE)**
• **WEHRMANN, Rüdiger**
**30457 Hannover (DE)**

(74) Vertreter: **Lauerwald, Jörg**
**Wabco GmbH**
**Am Lindener Hafen 21**
**30453 Hannover**
**Postfach 91 12 62**
**30432 Hannover (DE)**

(56) Entgegenhaltungen:
**EP-A1- 0 974 505    EP-A2- 0 445 575**
**WO-A1-93/18949    WO-A1-2007/012354**
**DE-C1- 4 443 814**

**Beschreibung**

Die Erfindung betrifft ein Verfahren zum Steuern eines Bremssystems eines Fahrzeuges, wobei das Fahrzeug wenigstens einen Motor, eine Betriebsbremse und eine Dauerbremse aufweist, gemäß den Merkmalen des Anspruchs 1. Die Erfindung betrifft ferner ein Bremssystem mit Dauerbremsintegration zur Ausführung des genannten Verfahrens.

Solche Fahrzeuge sind beispielsweise Nutzkraftwagen. Um den Verschleiß der Betriebsbremsen zu verringern, sind Dauerbremsen vorgesehen, die verschleißfrei ein Bremsmoment erzeugen können. Im Vergleich zu den Betriebsbremsen, die in der Regel Reibungsbremsen sind, zeigen die Dauerbremsen in der Regel ein verzögertes Ansprechverhalten.

Die EP0974505A1 beschreibt ein Verfahren zur Steuerung einer Bremsanlage eines Fahrzeuges mit einer steuerbaren Betriebsbremse und einer steuerbaren Dauerbremse, wobei die Betriebs- und Dauerbremse aufeinander abgestimmt angesteuert werden, wobei die Dauerbremse bei jedem Bremsvorgang aktiviert wird und abhängig vom Bremswunsch des Fahrers sowie von Fahrzustandsgrößen und Fahrbahnzustandsgrößen und Betriebszuständen des Fahrzeugs angesteuert wird, wobei die Adhäsionsverhältnisse erfasst werden und der Dauerbremsanteil durch Bestimmung des Schlupfbedarfs der Dauerbremse auf die Adhäsionsverhältnisse abgestimmt wird. Der Schlupfbedarf der dauergebremsten Achse wird vorausbestimmt und dann direkt zur Vorausbestimmung des maximal möglichen Dauerbremsanteils verwendet, welcher aus dem Quotienten der Antriebs- bzw. Dauerbremskraft an der Hinterachse und der Fahrzeugmasse gebildet wird.

Es ist daher bekannt, die Dauerbremsen so anzusteuern, dass sie ein vorgegebenes Dauerbremsen-Bremsmoment erzeugen. In der Zeit, in der dieses Dauerbremsen-Bremsmoment aufgebaut wird, übernehmen die Betriebsbremsen das Bereitstellen des fehlenden Bremsmoments.

Zum Ermitteln, wie groß das von den Betriebsbremsen aufzubringende Betriebsbremsen-Bremsmoment sein muss, damit die beispielsweise vom Fahrer mittels Bremspedal angeforderte Fahrzeug-Verzögerung erreicht wird, sendet die Dauerbremse, insbesondere über einen Datenbus, ein Signal, mit dem sie das von ihr aufgebrachte Dauerbremsen-Bremsmoment angibt. Die Bremsensteuerung errechnet aus dieser Angabe das von den Betriebsbremsen aufzubringende Bremsmoment, um der Fahrzeug-Verzögerungsanforderung gerecht zu werden.

Soweit im Rahmen der vorliegenden Anmeldung von der physikalischen Größe "Moment" gesprochen wird, beinhaltet dies auch einen Bezug auf die damit zusammenhängende Größe "Kraft" unter Berücksichtigung des jeweiligen Hebelarms. Entsprechend können auch die auf der Darstellung "Kraft" beruhenden  Größen in Momente umgerechnet werden.

Es hat sich gezeigt, dass das von der Dauerbremse in einer Statusnachricht mitgeteilte aufgebrachte Bremsmoment von den real auftretenden Werten divergiert. Insbesondere tritt beim Betätigen eine zeitliche Divergenz zwischen real anliegendem Dauerbremsmoment und gemeldetem Dauerbremsmoment auf. Dies führt insbesondere bei elektronisch gesteuerten Bremssystemen, die eine Verzögerungsregelung des Fahrzeugs dahingehend ausführen, dass automatisch von einer Elektronik die von einem Fahrer angeforderte Sollverzögerung ausgeregelt wird, zu einer unpräzisen Regelung, da das von der Dauerbremse über die Statusnachricht mitgeteilte Bremsmoment ungenau ist.

Der Erfindung liegt daher die Aufgabe zugrunde, eine verbesserte Bestimmung der Bremswirkung der Dauerbremse zu ermöglichen.

Diese Aufgabe wird durch die in dem Patentanspruch 1 angegebene Erfindung gelöst. Vorteilhafte Ausgestaltungen an der Erfindung sind in den Unteransprüchen angegeben.

Die Erfindung hat den Vorteil, ohne zusätzliche Sensoren eine Bestimmung der Bremswirkung der Dauerbremse mir erhöhter Genauigkeit zu ermöglichen, sowohl hinsichtlich der zeitlichen Genauigkeit als auch hinsichtlich der Wertegenauigkeit. Die Erfindung kann vorteilhaft in Form von einem Programmmodul in einer Elektronik zur Steuerung der Bremsanlage vorgesehen werden. Hierdurch ist die Erfindung kostengünstig realisierbar. Die Erfindung erlaubt insbesondere auch die Feststellung eines Defekts der Dauerbremse. Ein erkannter Defekt kann beispielsweise dem Fahrer als Warnmeldung angezeigt werden oder in einem Service-Speicher gespeichert werden. Ein weiterer Vorteil der Erfindung liegt darin, dass die Regelungsgüte der Verzögerungsregelung des Fahrzeugs verbessert werden kann, da akkuratere Werte für die von der Dauerbremse erbrachte Bremskraft vorliegen. Hierdurch kann der Fahrkomfort beim Abbremsen des Fahrzeuges gesteigert werden und die Zugfahrzeug-Anhänger-Abstimmung verbessert werden.

Die Bestimmung der Bremswirkung der Dauerbremse kann vorteilhaft mit den folgenden Schritten durchgeführt werden. Während einer Beschleunigungsphase eines Fahrzeugs wird als Differenzschlupf-Antriebskraft-Korrelationsgröße das Verhältnis FK des Differenzschlupfs DS und der Antriebskraft $F_{Motor}$ bestimmt:

$$FK = \frac{DS}{F_{Motor}} \qquad\qquad [1]$$

Der Differenzschlupf DS kann vorteilhaft als Differenz der Vorderachs-Drehgeschwindigkeit $v_V$ der Räder zur Hinterachs-Drehgeschwindigkeit $v_H$, bezogen auf die Vorderachs-Drehgeschwindigkeit $v_V$, bestimmt werden:

$$DS = \frac{v_V - v_H}{v_V} \qquad [2]$$

Bei einer anschließenden Bremsung mit betätigter Dauerbremse, z. B. einer automatischen Betätigung im Rahmen einer so genannten Dauerbremsenintegration (DBI), wird die an den Antriebsrädern wirkende Kraft, die von der Dauerbremse hervorgerufen wird, aus dem Differenzschlupf DS, der Differenzschlupf-Antriebskraft-Korrelationsgröße FK sowie den Bremskraftanteilen der Betriebsbremse $F_V$ (Vorderachse) und $F_H$ (Hinterachse) z. B. gemäß Gleichung [3] ermittelt. Der Term "Differenzschlupf DS dividiert durch die Differenzschlupf-Antriebskraft-Korrelationsgröße FK" stellt die gesamte Differenzkraft zwischen der Vorder- und der Hinterachse dar, welche um die von der Betriebsbremse hervorgerufenen Bremskraftanteile $F_V$, $F_H$ bereinigt wird. Die daraus resultierende wirksame Dauerbremskraft-Größe wird als $F_{DB}$ bezeichnet.

$$F_{DB} = \frac{DS}{FK} - (F_H - F_V) \qquad [3]$$

Die Bremskräfte der Betriebsbremse werden vorteilhaft als Produkt aus den jeweiligen Bremskraft-wirksamen Drücken $P_V$, $P_H$ an den Fahrzeugachsen und entsprechenden Bremsenkennwerten bestimmt:

$$F_V = P_V * c^*_V \qquad [4]$$

bzw.

$$F_H = P_H * c^*_H \qquad [5]$$

Die Bremskraft-wirksamen Drücke $P_V$, $P_H$ berücksichtigen bereits den Ansprechdruck und die Bremsenhysterese. Die Größen $c^*_V$ und $c^*_H$ geben einen in der Bremsensteuerelektronik parametrierten Bremsenkennwert an, jeweils für die Vorderachse und die Hinterachse.

Gemäß einer vorteilhaften Weiterbildung der Erfindung kann die so ermittelte Dauerbremskraft-Größe dem Fahrer des Fahrzeugs angezeigt werden. Es ist auch möglich, die Dauerbremskraft-Größe in ein Datenbussystem des Fahrzeugs einzuspeisen und hierdurch anderen Systemen in dem Fahrzeug, die auf eine präzisere Angabe der von der Dauerbremse erbrachten Bremsleistung angewiesen sind, zur Verfügung zu stellen. Weiterhin kann die ermittelte Dauerbremskraft-Größe für eine Korrektur der von der Dauerbremse gemeldeten Bremskraft verwendet werden, beispielsweise im Rahmen einer Verzögerungsregelung des Fahrzeuges.

Die genannten Verwendungsmöglichkeiten der Dauerbremskraft-Größe erfordern es je nach Ausstattung des Fahrzeugs, statt der physikalischen Größe "Kraft" oder "Moment" die physikalische Größe "Verzögerung", das heißt eine negative Beschleunigung, zu verwenden. Es ist nämlich üblich, dass von der Dauerbremse in der Statusnachricht ein Bremsmoment gemeldet wird. In diesem Zusammenhang kann die zuvor beschriebene Dauerbremskraft-Größe $F_{DB}$ in eine Dauerbremskraft-Verzögerungsgröße $Z_{DB}$ umgerechnet-werden, indem die Dauerbremskraft-Größe durch die Fahrzeugmasse m dividiert wird:

$$Z_{DB} = \frac{F_{DB}}{m} \qquad [6]$$

Die Fahrzeugmasse m kann beispielsweise als Parameter der Bremsensteuerung vorgegeben sein oder durch geeignete Programmalgorithmen während des Betriebs des Fahrzeugs abgeschätzt werden. Ebenso kann eine Umrechnung von der physikalischen Größe "Moment" erfolgen, indem der Reifenradius und die Getriebeübersetzungen (Schaltgetriebe, Differential) einbezogen werden.

Gemäß einer vorteilhaften Weiterbildung der Erfindung ist vorgesehen, dass eine Dauerbremsen-Statusnachricht von der Dauerbremse erfasst wird. Die Dauerbremsen-Statusnachricht enthält das gemeldete Bremsmoment der Dauerbremse. Gemäß der Weiterbildung ist weiterhin vorgesehen, dass eine Differenz der von der Dauerbremse gemeldeten Bremskraft und der Dauerbremskraft-Größe bestimmt wird. Sofern die Differenz dieser Größen einen vorbestimmten Wert überschreitet, wird ein Defekt der Dauerbremse erkannt. Entsprechend kann eine Warnmeldung an den Fahrer ausgegeben werden. Hierdurch kann die ermittelte Dauerbremskraft-Größe auch vorteilhaft für eine Überwachung der Dauerbremse verwendet werden.

Gemäß einer vorteilhaften Weiterbildung der Erfindung ist vorgesehen:

a) Erfassen einer Fahrzeug-Verzögerungsanforderung ($Z_{Soll}$), die eine zu erreichende Verzögerung des Fahrzeugs kodiert,

b) Errechnen einer Dauerbremsen-Bremsanforderung, die eine von der Dauerbremse aufzubringende Dauerbremsen-Bremskraft ($F_{DBSoll}$) kodiert, aus der Fahrzeug-Verzögerungsanforderung ($Z_{Soll}$),

c) Senden der Dauerbremsen-Bremsanforderung and die Dauerbremse zum Einstellen der Dauerbremsen-Bremskraft ($F_{DBSoll}$),

d) Bestimmen der Dauerbremskraft-Größe ($F_{DB}$),

e) Errechnen einer Betriebsbremsen-Bremsanforderung, die eine von der Betriebsbremse aufzubringende Betriebsbremsen-Bremskraft ($F_{BBSoll}$) kodiert, anhand der Fahrzeug-Verzögerungsanforderung ($Z_{Soll}$) und der Dauerbremskraft-Größe ($F_{DB}$), und

f) Senden der Betriebsbremsen-Bremsanforderung an die Betriebsbremse zum Einstellen der Betriebsbremsen-Bremskraft ($F_{BBSoll}$).

Hierdurch kann die ermittelte Dauerbremskraft-Größe vorteilhaft zur Verbesserung der Bremsenregelung eingesetzt werden, indem die Betriebsbremsen-Bremskraft nicht mehr anhand von der Dauerbremse gemeldeten Bremskraft bestimmt wird, sondern anhand der präziser ermittelten Dauerbremskraft-Größe $F_{DB}$.

Gemäß einer Weiterbildung der Erfindung ist vorgesehen, dass die reale Verzögerung des Fahrzeuges erfasst wird und eine angepasste Betriebsbremsen-Bremsanforderung errechnet wird anhand einer Abweichung zwischen der realen Verzögerung des Fahrzeuges und der Fahrzeug-Verzögerungsanforderung. Hierdurch kann eine Minimierung dieser Regelabweichung in der Art eines Regelkreises erfolgen. Durch die Verwendung der präziser die von der Dauerbremse erbrachte Bremskraft angebenden Dauerbremskraft-Größe ist eine komfortable und effiziente Verzögerungsregelung des Fahrzeuges möglich.

Die Erfindung ist vorteilhaft geeignet für ein Bremssystem für ein Fahrzeug mit (a) mindestens einer Betriebsbremse, (b) mindestens einer Dauerbremse und (c) einer Bremsensteuerung, die eingerichtet ist zum Durchführen eines Verfahrens mit den Schritten (i) Erfassen einer Fahrzeug-Verzögerungsanforderung, die eine zu erreichende Verzögerung des Fahrzeugs kodiert, (ii) Errechnen einer Dauerbremsen-Bremsanforderung, die ein von der Dauerbremse aufzubringendes Dauerbremsen-Bremsmoment kodiert aus der Fahrzeug-Verzögerungsanforderung, (iii) Senden der Dauerbremsen-Bremsanforderung an die Dauerbremse zum Einstellen eines Dauerbremsen-Bremsmoments, (iv) Bestimmen der Dauerbremskraft-Größe ($F_{DB}$), (v) Errechnen einer Betriebsbremsen-Bremsanforderung, die ein von der Betriebsbremse aufzubringendes Betriebsbremsen-Bremsrmoment kodiert anhand der Fahrzeug. Verzögerungsanforderung und der Dauerbremskraft-Größe ($F_{DB}$), und (vi) Senden der Betriebsbremsen-Bremsanforderung an die Betriebsbremse zum Einstellen eines Gesamtbremsmoments aus Dauerbremsen-Bremsmoment und Betriebsbremsen-Bremsmoment, das der Fahrzeug-Verzögerungsanforderung entspricht.

Gemäß einem weiteren Aspekt betrifft die Erfindung ein Verfahren zum Steuern eines derartigen Bremssystems.

Mittels der Erfindung kann ein Bremssystems derart betrieben werden, dass die vom Bremssystem verursachte Verzögerung des Fahrzeuges gleichmäßiger ist und besser der vom Fahrer gewünschten Fahrzeug-Verzögerungsanforderung entspricht.

Vorteilhaft an der Erfindung ist, dass die Abstimmung zwischen der Dauerbremse und der Betriebsbremse deutlich verbessert werden kann. Es hat sich nämlich herausgestellt, dass die von der Dauerbremse gesendeten Dauerbremsen-Statusnachrichten in manchen Fällen nicht exakt mit dem tatsächlich von der Dauerbremse aufgebrachten, realen Dauerbremsen-Bremsmoment übereinstimmen, wodurch dann die Betriebsbremsen unangemessen angesteuert werden. Dies wird erfindungsgemäß durch die ermittelte Dauerbremskraft-Größe ($F_{DB}$) vermieden, was sich vorteilhaft auf den Bremskomfort und die Zugfahrzeug-Anhänger-Abstimmung auswirkt.

Ein weiterer Vorteil ist, dass die Erfindung mit einfachen Mitteln umsetzbar ist. So sind die Sensoren und Erfassungsvorrichtungen, die zum Erfassen der für das Verfahren notwendigen Parameter notwendig sind, in den Fahrzeugen in der Regel vorhanden. Es ist damit lediglich notwendig, die Bremsensteuerung so zu modifizieren, dass sie die angegebenen Verfahrensschritte beim Betrieb des Bremssystems durchführt. Das ist einfach und kostengünstig möglich.

Ein weiterer Vorteil ist, dass der Bremsmoment-Fehlerkennwert gleichzeitig zur Diagnose etwaiger Fehlfunktionen der Dauerbremsen eingesetzt werden kann. Bringen die Dauerbremsen beispielsweise ständig ein außerhalb eines vorgegebenen Toleranzintervalls liegendes Bremsmoment auf, so deutet dies auf eine Fehlfunktion hin, die eine Reparatur notwendig macht. Schäden an der Dauerbremse oder Folgeschäden an der Betriebsbremse können so schnell und mit geringerem Aufwand erkannt werden.

Im Rahmen der vorliegenden Beschreibung wird unter einer Betriebsbremse insbesondere eine Reibungsbremse verstanden, bei der zwei Reibpartner miteinander in Reibkontakt gebracht werden, so dass ein Bremsmoment aufgebaut wird.

Unter einer Dauerbremse wird insbesondere eine primär wirkende Dauerbremse (Primärretarder) oder eine sekundär wirkende Dauerbremse (Sekundärretarder) verstanden. Ein Primärretarder ist motorseitig im Kraftfluss vor dem Getriebe angeordnet. Beispiele für Primärretarder sind Motorbremsen als Auspuffklappenbremsen oder als ventilgesteuerte Dauerbremsen. Sekundärretarder sind im Kraftfluss hinter dem Getriebe angeordnet, beispielsweise an der Kardanwelle, und umfassen beispielsweise hydraulisch wirkende Retarder oder Wirbelstrombremsen.

Unter der Bremsensteuerung wird insbesondere jegliche Vorrichtung verstanden, die angeordnet und ausgebildet ist, um die Betriebsbremse und die Dauerbremsen anzusteuern. Es muss sich dabei nicht um ein eigenständiges Bauteil handeln, es ist auch möglich, dass die Bremsensteuerung integraler Bestandteil einer anderen Steuerung ist, beispielsweise einer zentralen Steuereinheit.

Unter dem Erfassen einer Fahrzeug-Verzögerungsanforderung wird insbesondere jeder Vorgang verstanden, bei dem eine Information erfasst wird, aufgrund der von der Bremsensteuerung ein Verzögern des Fahrzeugs einzuleiten ist. Es ist dabei möglich, nicht aber notwendig, dass die Fahrzeug-Verzögerungsanforderung durch einen Fahrer des Fahrzeugs, beispielsweise per Bremspedal, ausgelöst wird. Es ist beispielsweise auch möglich, dass die Fahrzeug-Verzögerunsanforderung von einem Fahrersassistenzsystem, einem Antiblockiersystem oder einem sonstigen Hilfssystem des Bremssystems bzw. des Fahrzeugs gesendet wird.

Bei dem Errechnen der Dauerbremsen-Bremsanforderung aus der Fahrzeug-Verzögerungsanforderung muss es sich nicht um eine Rechnung im strengen mathematischen Sinne handeln, es ist ausreichend, wenn beispielsweise eine Datenbank ausgelesen wird, in der für vorgegebene Fahrzeug-Verzögerungsanforderungen entsprechende Dauerbremsen-Bremsanforderungen hinterlegt sind.

Unter einer Dauerbremsen-Statusnachricht wird insbesondere jede von der Dauerbremse erzeugte Nachricht verstanden, mit der diese darüber Auskunft gibt, wie groß das von ihr aufgebrachte Dauerbremsen-Bremsmoment ist. Das in der Dauerbremsen-Statusnachricht kodierte Dauerbremsen-Bremsmoment wird dabei insbesondere anhand von Betriebsparametern der Dauerbremse ermittelt, beispielsweise einem Spulenstrom und einer Wellendrehzahl im Falle einer Wirbelstrombremse. Die Dauerbremsen-Statusnachricht kann auch eine Information über die von der Dauerbremse aufgebrachte Bremskraft ($F_{DBStatus}$) und/oder die von der Dauerbremse bewirkte Verzögerung ($Z_{DBStatus}$) des Fahrzeuges enthalten. Im Ergebnis handelt es sich hierbei um verschiedene physikalische Darstellungen vergleichbarer Größen, die insgesamt die Bremswirkung der Dauerbremse kennzeichnen.

Wenn im Rahmen der vorliegenden Anmeldung auf das Bremsmoment abgestellt wird, so ist es nicht notwendig, dass dieses Bremsmoment explizit in Form einer Größe dargestellt ist. In der Regel werden Bremsmomente bei der Verarbeitung durch die Bremsensteuerung durch Zahlen repräsentiert, die einen eindeutigen Schluss auf das jeweils kodierte Bremsmoment zulassen. Es ist also auch möglich, dass statt eines Bremsmoments die jeweils zugeordnete Verzögerung erfasst wird, um das entsprechende Bremsmoment zu repräsentieren.

Unter der Bremsmoment-Erfassungsvorrichtung wird insbesondere jede Vorrichtung verstanden, die eingerichtet ist, um einen Wert zu erfassen, aus dem auf das real anliegende Bremsmoment geschlossen werden kann. Beispielsweise umfasst die Bremsmoment-Erfassungsvorrichtung einen Radsensor, mit dem eine Drehbewegung eines Rads des Fahrzeugs erfasst wird, auf dem die Dauerbremse und/oder die Betriebsbremse wirken. Bei bekanntem Umfang kann aus dem Signal des Radsensors dann auf die Geschwindigkeit des Fahrzeugs und durch Ableiten nach der Zeit auf die Beschleunigung geschlossen werden. Bei bekannter Masse des Fahrzeugs, die auf im Stand der Technik bekannte Weise berechnet werden kann, wird dann aus der Verzögerung auf das Anliegen der Bremsmomente geschlossen. Auf gleiche Weise wird mittels der bekannten Masse des Fahrzeugs aus der Fahrzeug-Verzögerungsanforderung das notwendige Bremsmoment berechnet. Ein derartiges Verfahren gehört zum Stand der Technik.

Unter dem Bremsmoment-Fehlerkennwert wird insbesondere ein Zahlenwert, eine Größe oder eine Gesamtheit von Zahlen oder Größen verstanden, die Abweichungen zwischen dem Bremsmoment-Kennwert und dem realen Bremsmoment beschreibt.

Die Erfindung beinhaltet zudem ein Fahrzeug mit einem oben beschriebenen Bremssystem sowie Verfahren, bei denen Schritte ausgeführt werden, zu denen die Bremsensteuerung wie oben beschrieben eingerichtet ist.

Im Folgenden wird ein Ausführungsbeispiel der Erfindung anhand der beigefügten Zeichnung näher erläutert.

Dabei zeigt

Figur 1          ein erfindungsgemäßes Fahrzeug mit einem erfindungsgemäßen Bremssystem und
Figur 2 und 3    Zeitdiagramme bei der Abbremsung des Fahrzeugs.

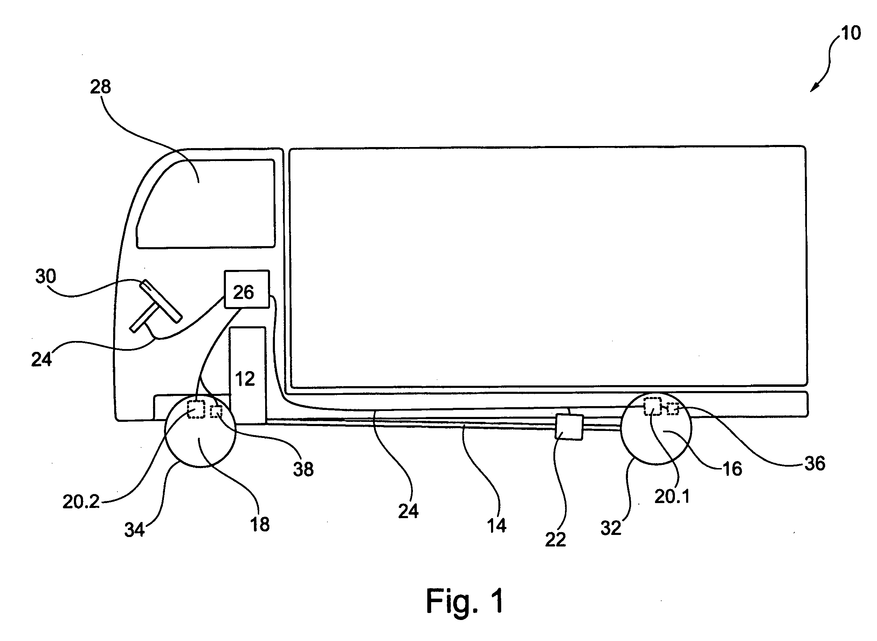

Figur 1 zeigt schematisch ein Fahrzeug 10 in Form eines Lastkraftwagens, der einen Motor 12 und eine über eine Kardanwelle 14 angetriebene Antriebsachse 16 aufweist. Der Motor 12 ist zudem mit einem nicht gesondert dargestellten Getriebe verbunden, das z.B. an den Motor angeflanscht sein kann. Das Getriebe wirkt ausgangsseitig auf die Kardanwelle 14. Die Antriebsachse 16 und eine Vorderachse 18 werden durch zugeordnete Betriebsbremsen 20.1, 20.2, die schematisch eingezeichnet sind, gebremst.

Das Fahrzeug 10 umfasst zudem eine als Sekundärretarder wirkende Dauerbremse 22 in Form einer an die Kardanwelle 14 angreifenden elektrischen Wirbelstrombremse. Die Betriebsbremsen 20.1, 20.2 und die Dauerbremse 22 stehen über einen CAN-Bus 24 in Verbindung mit einer Bremsensteuerung 26, die ihrerseits in Verbindung mit einer nicht eingezeichneten zentralen Steuereinheit steht.

In einer Fahrerkabine 28 des Fahrzeugs 10 ist ein Bremspedal 30 angeordnet, über das ein Fahrer eine Fahrzeug-Verzögerungsanforderung an die Bremsensteuerung 26 abgeben kann. Je stärker das Bremspedal 30 aus einer Ruhestellung verkippt ist, umso größer ist die Fahrzeug-Verzögerungsanforderung.

An einem Rad 32 der Antriebsachse 16 und an einem Rad 34 der Vorderachse 18 sind jeweilige Radsensoren 36 bzw. 38 angeordnet, die eine Drehgeschwindigkeit $\omega_{32}$ bzw. $\omega_{34}$ der Räder 32 bzw. 34 an die Bremsensteuerung 26 übermitteln. Die Bremsensteuerung 26 errechnet aus den Drehgeschwindigkeiten $\omega_{32}$, $\omega_{34}$ durch Ableiten nach der Zeit t eine Drehverzögerung $\dot{\omega}_{real}$. In der Bremsensteuerung 26 ist zudem eine Masse m des Fahrzeugs 10 abgespeichert und die Bremsensteuerung 26 ist ausgebildet, um aus der Drehbeschleunigung $\dot{\omega}_{real}$ und aus den Radien der Räder 32, 34 eine Verzögerung $Z_{real}$ sowie zusätzlich aus der Fahrzeug-Masse m ein Gesamt-Bremsmoment $M_{gesamt}$ zu berechnen, das über die Antriebsachse 16 und die Vorderachse 18 aufgebracht wird.

Die Bremsensteuerung 26 ist eingerichtet, um das im Folgenden beschriebene Verfahren durchzuführen. Zunächst erfasst die Bremsensteuerung 26 über den CAN-Bus 24 eine Fahrzeug-Verzögerungsanforderung $Z_{Soll}$ vom Bremspedal 30. Aus der Fahrzeug-Verzögerungsanforderung $Z_{Soll}$ errechnet die Bremsensteuerung 26 eine Dauerbremsen-Bremsanforderung in Form eines über den CAN-Bus 24 zu versendenden Signals, das ein von der Dauerbremse 22 aufzubringendes Dauerbremsen-Bremsmoment $M_{22,\,Soll}$ kodiert. Die Dauerbremse 22 erhöht daraufhin einen Spulenstrom in der Wirbelstrombremse so, dass sich ein Bremsmoment $M_{22}$ auf die Kardanwelle 14 aufbaut. Die Dauerbremse 22 sendet daraufhin eine Dauerbremsen-Statusnachricht, die ein Anliegen des Dauerbremsen-Bremsmoments $M_{22,\,Status}$ kodiert, an die Bremsensteuerung 26.

Die Bremsensteuerung 26 errechnet anhand der Fahrzeug-Verzögerungsanforderung $Z_{Soll}$ und der Masse m des Fahrzeugs einerseits sowie dem von der Dauerbremse 22 mitgeteilten Dauerbremsen-Bremsmoment $M_{22,\,Status}$ eine Betriebsbremsen-Bremsanforderung, die ein Betriebsbremsen-Bremsmoment $M_{20,\,Soll}$ kodiert und sendet diese an die Betriebsbremse 20.

Die Betriebsbremse 20 bremst dann die Räder der Antriebsachse 16 und der Vorderachse 18 gemäß diesem Betriebsbremsen-Bremsmoment $M_{20,\,Soll}$. Sofern die Dauerbremse 22 in ihrer Dauerbremsen-Statusnachricht das korrekte Dauerbremsen-Bremsmoment $M_{22,\,Status}$ übermittelt, addieren sich die Bremsmomente zum korrekten Gesamt-Bremsmoment $M_{gesamt}$.

Die Radsensoren 36, 38 erfassen beständig, beispielsweise alle 3 Millisekunden, die Drehgeschwindigkeiten $\omega_{32}$, $\omega_{34}$ der Räder des Fahrzeugs. Die Bremsensteuerung 26 errechnet daraus ein reales Bremsmoment $M_{real}$ des Fahrzeugs 10. Die Radsensoren 36, 38 sind damit zusammen mit einer gegebenenfalls vorhandenen Auswertlogik für die Messwerte Teil einer Bremsmoment-Erfassungsvorrichtung.

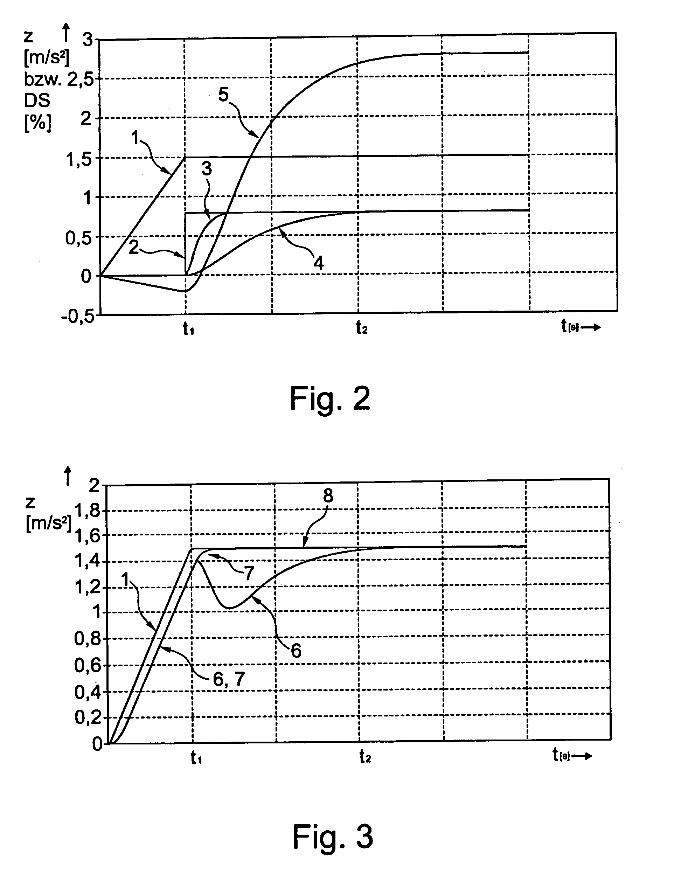

In der Figur 2 sind verschiedene Verzögerungsgrößen in einem Zeitdiagramm dargestellt. Zudem ist in demselben Diagramm der Differenzschlupf DS als Kurvenverlauf 5 dargestellt. Der Kurvenverlauf 1 gibt beispielhaft eine Fahrzeug-Verzögerungsanforderung $Z_{Soll}$ wieder, bei der der Fahrer das Bremspedal gleichmäßig von der Neutralstellung derart betätigt, dass eine Verzögerung von 1,5 m/s$^2$ angefordert wird. Die Bremsensteuerung 26 gibt sodann eine Dauerbremsen-Bremsanforderung an die Dauerbremse 22 zum Einstellen einer Dauerbremsen-Bremskraft von etwa 0,8 m/s$^2$, was in der Figur 2 durch den Kurvenverlauf 2 in Form eines Rechtecksignals dargestellt ist. Der Kurvenverlauf 3 zeigt die von der Dauerbremse 22 über die Statusnachricht gemeldete, von der Dauerbremse erbrachte Verzögerung, von der in der Figur 2 ersichtlich ist, dass diese sich mit einer Übergangsfunktion dem Kurvenverlauf 2 annähert. Es sei angenommen, dass die von der Dauerbremse 22 gemeldete Verzögerung eine zeitliche Divergenz zu der wirklich vorliegenden von der Dauerbremse erbrachten Verzögerung aufweist, die etwa dem Kurvenverlauf 4 entspricht. Durch Verwendung der erfindungsgemäßen Bestimmung der Bremswirkung der Dauerbremse kann eine Dauerbremskraft-Größe $F_{DB}$ ermittelt werden, die recht präzise dem Kurvenverlauf 4 entspricht.

Wie in der Figur 2 erkennbar ist, liegt zumindest in dem Zeitraum zwischen den Zeitpunkten $t_1$ und $t_2$ eine deutliche zeitliche Divergenz zwischen der von der Dauerbremse gemeldeten Verzögerung und der wirklich vorliegenden von der Dauerbremse 22 erbrachten Verzögerung vor.

Die Figur 3 zeigt die entsprechenden Auswirkungen der in der Figur 2 dargestellten Kurvenverläufe anhand der sich bei einer von der Bremsensteuerung 26 durchgeführten Verzögerungsregelung real einstellenden Fahrzeugverzögerung. Der Kurvenverlauf 1 entspricht wiederum der Fahrzeug-Verzögerungsanforderung $Z_{Soll}$, die entsprechend von der Bremsensteuerung im Rahmen der Verzögerungsregelung ausgeregelt werden soll. Der Kurvenverlauf 6 gibt die real vorliegende Fahrzeugverzögerung an, wenn für die Verzögerungsregelung als Rückkopplungsgröße die von der Dauerbremse gemeldete Verzögerung verwendet wird, die die erwähnte zeitliche Divergenz zur realen Verzögerung hat. Man erkennt in dem Zeitraum zwischen den Zeitpunkten $t_1$ und $t_2$ eine unerwünschte Abweichung zu der an sich gewünschten Fahrzeugverzögerung, die in der Figur 3 durch den Kurvenverlauf 8 wiedergegeben wird. Es ergibt sich sozusagen ein "Durchhänger" in der real vorliegenden Fahrzeugverzögerung, der von einem Fahrer als unangenehm empfunden werden kann. Dieser Durchhänger bewirkt häufig ein Nachtreten des Bremspedals durch den Fahrer und dädürch eine Überbremsung im weiteren Verlauf der Abbremsung. Der Kurvenverlauf 7 gibt in der Figur 3 die real vorliegende Fahrzeugverzögerung an, wenn als Rückkopplungsgröße statt der von der Dauerbremse gemeldeten Verzögerung die erfindungsgemäß bestimmte Bremswirkung der Dauerbremse verwendet wird, nämlich in Form der Dauerbremskraft-Größe $F_{DB}$. Man erkennt anhand der Figur 3, dass hierdurch die real vorliegende Fahrzeugverzögerung bis auf  eine systembedingte geringe zeitliche Verzögerung vor dem Zeitpunkt $t_1$ recht präzise der gewünschten Fahrzeugverzögerung gemäß dem Kurvenverlauf von 1, 8 entspricht.

Das Gesamt-Bremsmoment der Bremsanlage ist die Summe aus dem Dauerbremsen-Bremsmoment $M_{22, DB}$ und dem Betriebsbremsen-Bremsmoment $M_{20, BB}$, das an die Betriebsbremsen gesendet worden ist. Es gilt also: $M_{gesam t} = M_{22, DB} + M_{20, BB}$.

## Patentansprüche

1.  Verfahren zum Steuern eines Bremssystems eines Fahrzeugs (10), wobei das Fahrzeug wenigstens einen Motor (12), eine Betriebsbremse (20) und eine Dauerbremse (22) aufweist, bei dem zur Bestimmung der Bremswirkung der Dauerbremse (22)

    a) zumindest während einer Beschleunigungsphase des Fahrzeugs (10) eine Differenzschlupf-Antriebskraft-Korrelationsgröße (FK) bestimmt wird, und
    b) zumindest während einer Bremsbetätigungsphase eine die von der Dauerbremse (22) erbrachte Bremskraft angebende Dauerbremskraft-Größe ($F_{DB}$) unter Verwendung des bei der Abbremsung auftretenden Differenzschlupfs (DS), der Differenzschlupf-Antriebskraft-Korrelationsgröße (FK) sowie den von der Betriebsbremse (20) des Fahrzeugs (10) erbrachten Bremskraftanteilen ($F_V$, $F_H$) bestimmt wird,

    **dadurch gekennzeichnet, dass**
    die Dauerbremskraft-Größe ($F_{DB}$) als Quotient des beim Abbremsen auftretenden Differenzschlupfs (DS) zu der Differenzschlupf-Antriebskraft-Korrelationsgröße (FK) bestimmt wird, wobei der von der Betriebsbremse (20) hervorgerufene Anteil des Differenzschlupfs kompensiert wird.

2.  Verfahren nach Anspruch 1, **dadurch gekennzeichnet, dass** der Differenzschlupf (DS) als Differenz der Vorderachs-Drehgeschwindigkeit ($V_V$) zur Hinterachs-Drehgeschwindigkeit ($V_H$), bezogen auf die Vorderachs-Drehgeschwindigkeit ($V_V$), bestimmt wird.

3.  Verfahren nach wenigstens einem der vorhergehenden Ansprüche, **dadurch gekennzeichnet, dass** die Differenzschlupf-Antriebskraft-Korrelationsgröße (FK) als Quotient aus dem Differenzschlupf (DS) und der vom Motor (12) des Fahrzeugs (10) erbrachten Antriebskraft ($F_{Motor}$) bestimmt wird.

4.  Verfahren nach wenigstens einem der vorhergehenden Ansprüche, **dadurch gekennzeichnet, dass** als von der Betriebsbremse (20) des Fahrzeugs (10) erbrachte Bremskraftanteile ($F_V$, $F_H$) die Differenz von Hinterachs-Bremskraft ($F_H$) und Vorderachs-Bremskraft ($F_V$) verwendet wird.

5.  Verfahren nach wenigstens einem der vorhergehenden Ansprüche, **dadurch gekennzeichnet, dass** die Dauerbremskraft-Größe ($F_{DB}$) dem Fahrer des Fahrzeugs (10) angezeigt und/oder in ein Datenbussystem (24) des Fahrzeugs (10) eingespeist wird und/oder für eine Korrektur einer von der Dauerbremse (22) gemeldeten Bremskraft ($F_{DBStatus}$) bzw. gemeldeten Verzögerung ($Z_{DBStatus}$) verwendet wird.

6.  Verfahren nach wenigstens einem der vorhergehenden Ansprüche, **gekennzeichnet durch** die Schritte:

a) Erfassen einer Dauerbremsen-Statusnachricht von der Dauerbremse (22) über deren gemeldete Bremskraft ($F_{DBStatus}$),

b) Bestimmung der Differenz der von der Dauerbremse (22) gemeldeten Bremskraft ($F_{DBStatus}$) und der Dauerbremskraft-Größe ($F_{DB}$), und

c) Erkennung eines Defekts der Dauerbremse (22), wenn die Differenz einen vorbestimmten Wert überschreitet.

7. Verfahren nach wenigstens einem der vorhergehenden Ansprüche, **gekennzeichnet durch** die Schritte:

a) Erfassen einer Fahrzeug-Verzögerungsanforderung ($Z_{Soll}$), die eine zu erreichende Verzögerung des Fahrzeugs (10) kodiert,

b) Errechnen einer Dauerbremsen-Bremsanforderung, die eine von der Dauerbremse (22) aufzubringende Dauerbremsen-Bremskraft ($F_{DBSoll}$) kodiert, aus der Fahrzeug-Verzögerungsanforderung ($Z_{Soll}$),

c) Senden der Dauerbremsen-Bremsanforderung an die Dauerbremse (22) zum Einstellen der Dauerbremsen-Bremskraft ($F_{DBSoll}$),

d) Bestimmen der Dauerbremskraft-Größe ($F_{DB}$),

e) Errechnen einer Betriebsbremsen-Bremsanforderung, die eine von der Betriebsbremse (20) aufzubringende Betriebsbremsen-Bremskraft ($F_{BBSoll}$) kodiert, anhand der Fahrzeug-Verzögerungsanforderung ($Z_{Soll}$) und der Dauerbremskraft-Größe ($F_{DB}$), und

f) Senden der Betriebsbremsen-Bremsanforderung an die Betriebsbremse zum Einstellen der Betriebsbremsen-Bremskraft ($F_{BBSoll}$).

8. Verfahren nach Anspruch 7, **gekennzeichnet durch** den weiteren Schritt:

g) Erfassen der realen Verzögerung des Fahrzeuges ($Z_{real}$) und Errechnen einer angepassten Betriebsbremsen-Bremsanforderung anhand einer Abweichung zwischen der realen Verzögerung des Fahrzeuges ($Z_{real}$) und der Fahrzeug-Verzögerungsanforderung ($Z_{Soll}$) zur Minimierung dieser Abweichung in der Art eines Regelkreises.

9. Bremsensteuerung, worin das Verfahren nach wenigstens einem der vorhergehenden Ansprüche durchgeführt ist.

10. Bremssystem mit einer Bremsensteuerung nach Anspruch 9.

11. Fahrzeug mit einem Bremssystem nach Anspruch 10.

**Claims**

1. A method for controlling a brake system of a vehicle (10), the vehicle having at least one engine (12), one service brake (20), and one retarder (22), in which method, to determine the braking action of the retarder (22),

a) at least during an acceleration phase of the vehicle (10), a differential slip-drive force correlation variable (FK) is determined, and

b) at least during a brake actuation phase, a retarder braking force variable ($F_{DB}$), which specifies the braking force applied by the retarder (22), is determined employing the differential slip (DS) occurring during the braking, the differential slip-drive force correlation variable (FK), and the braking force components ($F_V$, $F_H$) applied by the service brake (20) of the vehicle (10),

**characterized in that** the retarder braking force variable ($F_{DB}$) is determined as the quotient of the differential slip (DS) occurring during braking to the differential slip-drive force correlation variable (FK), the component of the differential slip caused by the service brake (20) being compensated for.

2. Method according to Claim 1, **characterized in that** the differential slip (DS) is determined as the difference of the front axle rotational velocity ($V_V$) to the rear axle rotational velocity ($V_H$), in relation to the front axle rotational velocity ($V_V$).

3. Method according to at least one of the preceding claims, **characterized in that** the differential slip-drive force correlation variable (FK) is determined as the quotient of the differential slip (DS) and the drive force ($F_{Motor}$) applied by the engine (12) of the vehicle (10).

4. Method according to at least one of the preceding claims, **characterized in that** the difference of rear axle braking force ($F_H$) and front axle braking force ($F_V$) is used as the braking force components ($F_V$, $F_H$) applied by the service brake (20) of the vehicle (10).

5. Method according to at least one of the preceding claims, **characterized in that** the retarder braking force variable ($F_{DB}$) is displayed to the driver of the vehicle (10) and/or is fed into a data bus system (24) of the vehicle (10) and/or is used for a correction of a braking force ($F_{DBStatus}$) or deceleration ($Z_{DBStatus}$) reported by the retarder (22).

6. Method according to at least one of the preceding claims, **characterized by** the following steps:

   a) acquiring a retarder status message from the retarder (22) via the braking force ($F_{DBStatus}$) reported thereby,
   b) determining the difference between the braking force ($F_{DBStatus}$) reported by the retarder (22) and the retarder braking force variable ($F_{DB}$), and
   c) recognizing a defect of the retarder (22) if the difference exceeds a predetermined value.

7. Method according to at least one of the preceding claims, **characterized by** the following steps:

   a) acquiring a vehicle deceleration request ($Z_{Soll}$), which codes a deceleration of the vehicle (10) to be achieved,
   b) calculating a retarder braking request, which codes a retarder braking force ($F_{DBSoll}$) to be applied by the retarder (22), from the vehicle deceleration request ($Z_{Soll}$),
   c) transmitting the retarder braking request to the retarder (22) to set the retarder braking force ($F_{DBSoll}$),
   d) determining the retarder braking force variable ($F_{DB}$),
   e) calculating a service brake braking request, which codes a service brake braking force ($F_{BBSoll}$) to be applied by the service brake (20), on the basis of the vehicle deceleration request ($Z_{Soll}$) and the retarder braking force variable ($F_{DB}$), and
   f) transmitting the service brake braking request to the service brake to set the service brake braking force ($F_{BBSoll}$).

8. Method according to Claim 7, **characterized by** the further step:

   g) acquiring the real deceleration of the vehicle ($Z_{real}$) and calculating an adapted service brake braking request on the basis of a deviation between the real deceleration of the vehicle ($Z_{real}$) and the vehicle deceleration request ($Z_{Soll}$) to minimize this deviation in the manner of a control loop.

9. Brake controller in which the method is implemented according to at least one of the preceding claims.

10. Brake system having a brake controller according to Claim 9.

11. Vehicle having a brake system according to Claim 10.

**Revendications**

1. Procédé de commande d'un système de freinage d'un véhicule (10), le véhicule présentant au moins un moteur (12), un frein de service (20) et un frein continu (22), dans lequel, pour déterminer l'effet de freinage du frein continu (22),

   a) au moins pendant une phase d'accélération du véhicule (10), une grandeur de corrélation entre le glissement différentiel et la force d'entraînement (FK) est déterminée, et
   b) au moins pendant une phase d'actionnement du frein, une grandeur de force de freinage continu ($F_{DB}$) indiquant la force de freinage fournie par le frein continu (22) est déterminée en utilisant le glissement différentiel (DS) se produisant lors du freinage, la grandeur de corrélation entre le glissement différentiel et la force d'entraînement (FK) ainsi que les proportions de la force de freinage ($F_V$, $F_H$) fournies par le frein de service (20) du véhicule (10),

   **caractérisé en ce que**
   la grandeur de force de freinage continu ($F_{DB}$) est déterminée en tant que quotient du glissement différentiel (DS) se produisant lors du freinage par la grandeur de corrélation entre le glissement différentiel et la force d'entraînement (FK), la proportion de glissement différentiel provoquée par le frein de service (20) étant compensée.

2. Procédé selon la revendication 1, **caractérisé en ce que** le glissement différentiel (DS) est déterminé en tant que différence entre la vitesse de rotation de l'essieu avant ($V_V$) et la vitesse de rotation de l'essieu arrière ($V_H$), par rapport à la vitesse de rotation de l'essieu avant ($V_V$).

3. Procédé selon au moins l'une quelconque des revendications précédentes, **caractérisé en ce que** la grandeur de corrélation entre le glissement différentiel et la force d'entraînement (FK) est déterminée en tant que quotient du glissement différentiel (DS) par la force d'entraînement ($F_{Motor}$) fournie par le moteur (12) du véhicule (10).

4. Procédé selon au moins l'une quelconque des revendications précédentes, **caractérisé en ce que** l'on utilise, en tant que proportions de la force de freinage ($F_V$, $F_H$) fournies par le frein de service (20) du véhicule (10), la différence entre la force de freinage de l'essieu arrière ($F_H$) et la force de freinage de l'essieu avant ($F_V$).

5. Procédé selon au moins l'une quelconque des revendications précédentes, **caractérisé en ce que** la grandeur de force de freinage continu ($F_{DB}$) est indiquée au conducteur du véhicule (10) et/ou est entrée dans un système de bus de données (24) du véhicule (10) et/ou est utilisée pour une correction d'une force de freinage ($F_{DBStatus}$) ou d'un ralentissement ($Z_{DBStatus}$) communiqué(e) par le frein continu (22).

6. Procédé selon au moins l'une quelconque des revendications précédentes, **caractérisé par** les étapes suivantes :

   a) détection d'une information de statut du frein continu par le frein continu (22) par le biais de la force de freinage ($F_{DBStatus}$) qu'il communique,
   b) détermination de la différence entre la force de freinage ($F_{DBStatus}$) communiquée par le frein continu (22) et la grandeur de force de freinage continu ($F_{DB}$), et
   c) détection d'un défaut du frein continu (22) lorsque la différence dépasse une valeur prédéterminée.

7. Procédé selon au moins l'une quelconque des revendications précédentes, **caractérisé par** les étapes suivantes :

   a) détection d'une demande de ralentissement du véhicule ($Z_{Soll}$) qui code un ralentissement du véhicule (10) devant être réalisé,
   b) calcul d'une demande de freinage de frein continu, laquelle code une force de freinage de frein continu ($F_{DBSoll}$) devant être appliquée par le frein continu (22), à partir de la demande de ralentissement du véhicule ($Z_{Soll}$),
   c) envoi de la demande de freinage de frein continu au frein continu (22) afin d'ajuster la force de freinage de frein continu ($F_{DBSoll}$),
   d) détermination de la grandeur de force de freinage continu ($F_{DB}$),
   e) calcul d'une demande de freinage de frein de service, qui code une force de freinage de frein de service ($F_{BBSoll}$) devant être appliquée par le frein de service (20), à l'aide de la demande de ralentissement du véhicule ($Z_{Soll}$) et de la grandeur de force de freinage continu ($F_{DB}$), et
   f) envoi de la demande de freinage de frein de service au frein de service afin d'ajuster la force de freinage de frein de service ($F_{BBSoll}$).

8. Procédé selon la revendication 7, **caractérisé par** l'étape supplémentaire suivante :

   g) détection du ralentissement réel du véhicule ($Z_{real}$) et calcul d'une demande de freinage de frein de service adaptée à l'aide d'un écart entre le ralentissement réel du véhicule ($Z_{real}$) et la demande de ralentissement du véhicule ($Z_{Soll}$) afin de minimiser cet écart à la manière d'un circuit de régulation.

9. Commande de frein, mettant en oeuvre le procédé selon au moins l'une quelconque des revendications précédentes.

10. Système de freinage comprenant une commande de frein selon la revendication 9.

11. Véhicule comprenant un système de freinage selon la revendication 10.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0974505 A1